Europäisches Patentamt

European Patent Office

Office européen des brevets

(11) Publication number: **0 371 136**
**A1**

## EUROPEAN PATENT APPLICATION
### published in accordance with Art. 158(3) EPC

(21) Application number: 89902073.9

(22) Date of filing: 03.02.89

(86) International application number:
PCT/JP89/00113

(87) International publication number:
WO 89/11397 (30.11.89 89/28)

(51) Int. Cl.5: **B42D 15/02**

(30) Priority: 23.05.88 JP 125583/88

(43) Date of publication of application:
06.06.90 Bulletin 90/23

(84) Designated Contracting States:
**BE LU NL**

(71) Applicant: **DAIMATSU KAGAKU KOGYO CO.,
LTD.**
**2-1, Obase-cho, Tennoji-ku
Osaka-shi, Osaka 543(JP)**

(72) Inventor: **MATSUGUCHI, Noboru**
**4-12-3, Yamate-cho
Suita-shi Osaka-fu 564(JP)**
Inventor: **MATSUGUCHI, Tadashi**
**20-5, Maruyama-cho
Suita-shi Osaka-fu 564(JP)**

(74) Representative: **Smulders, Theodorus A.H.J.,
Ir. et al**
**Vereenigde Octrooibureaux Nieuwe Parklaan
107
NL-2587 BP 's-Gravenhage(NL)**

(54) **POSTCARD AND METHOD OF PREPARING SAME.**

(57) A postcard includes a paper mount and a sticker to be stuck to the mount and covering at least a part thereof. The sticker is made by forming a layer of a thermally bondable resin on the main surface of a substrate and then a bondability-lowering layer on the main surface of the layer of the thermally bondable resin so as to decrease the bonding strength of a part of the layer of the resin to a low level and stick this part on the mount lightly. Accordingly, the sticker can be separated at its bondability-lowering layer-carrying part from the mount of the postcard relatively simply to enable various kinds of information recorded on the main surface of the mount of the postcard to be recognized.

F I G. 2

1

# DESCRIPTION

## (TITLE OF INVENTION)

## POSTCARD AND MANUFACTURING METHOD THEREOF

Technical Field

The present invention relates to a postcard and a manufacturing method thereof. More specifically, the present invention relates to a postcard which confidential matter is covered in transit by post and a just recipient can see the confidential matter suitably, and a manufacturing method thereof.

Background Art

Recently, mails printed confidential matter such as a letter of bank account are increased, and it is desired to develop a postcard which the confidential matter is covered in transit by post and the just recipient can see the confidential matter easily.

Conventionally, as seen in Japanese Utility Model Patent Publication No. 54-3789, a postcard, which an inner-frame portion can be peeled off partially and confidential matters of the bottom layer can be seen, has been developed.

However, in order to facilitate peeling partially, as seen in Japanese Utility Model Patent Publication No. 54-3789, a front paper must be possible to peel off partially by forming an adhesive surface formed by coating a dry paste entirely on the front paper surface, and by subjecting the other postcard material to a peeling process such as silicon processing so as to be peeled off partially or only the inner-frame portion is peeled off. Thus, in the prior art postcard, since the dry paste must be coated on the front paper side and the peeling processing such as silicon processing must be performed on the postcard material side in manufacturing, structures of the postcard become complicated and result in a high manufacturing cost due to many manufacturing processes.

Disclosure of Invention

Therefore, it is a principal object of the present invention to provide a postcard, in which surface treatment of the postcard material is not required any only by post-processing of the sticking material for covering a confidential matter, a portion which is possible to be peeled off partly and a portion which is adhered completely are divided, in which the confidential matter is covered in transit by post and the just recipient can see the confidential matter easily, and a manufacturing method thereof.

A postcard in accordance with the present invention comprises a postcard material, and a sticking material adhered on the postcard material for covering at least a part of the postcard material, wherein the sticking material comprising a base material formed with a heat adherent resin layer on its main surface, whereon an adhesion retarding layer which reduces the adhesive force of the heat adherent resin layer to weaken adhesiveness to the postcard material is formed.

A manufacturing method of a postcard in accordance with the present invention comprises a process for preparing a postcard material, a process for printing and coating picture lines on the postcard material, a process for forming a sticking material by forming a heat adherent resin layer on a base material and by forming an adhesion retarding layer which reduces the adhesive force of the heat adherent resin layer to weaken adhesiveness to the postcard material, and a process for adhering the heat adherent resin layer to the postcard material by attaching the heat adherent resin layer to the postcard material and by pressing and heating said sticking material.

The above and other objects, features and advantages of the present invention will be more apparent from the following detailed description taken in connection with the accompanying drawings.

4

Brief Description of Drawings

Fig. 1 is a perspective view of a postcard of one embodiment of the present invention.

Fig. 2 is a partially sectional view of the embodiment of Fig. 1.

Fig. 3A is a perspective view showing in a state which a sticking material of the embodiment of Fig. 1 is peeled off, and Fig. 3B is a partially sectional view in the state.

Fig. 4 is a diagrammatical view of a manufacturing machine showing one example of manufacturing process of the sticking material.

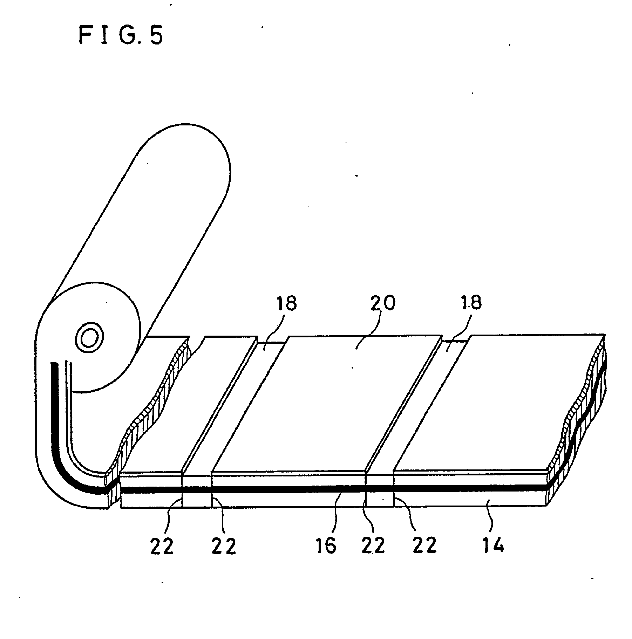

Fig. 5 is a perspective view of the sticking material.

Fig. 6 is a surface view of a separate embodiment.

Fig. 7 is a backside view of the embodiment of Fig. 6.

Fig.8A is a perspective view of a postcard of the embodiment of Fig. 6, Fig. 8B is a partially sectional view thereof.

Fig. 9 is a surface view of a continuous raw paper of the embodiment of Fig. 6.

Fig. 10 is a perspective view of a sticking material of the embodiment of Fig. 6.

Fig. 11 is a perspective view generally showing an adhesion machine of a sticking material.

Fig. 12A andFig. 12Bare diagrammatical views of an adhesive portion transfer unit.

Fig. 13 is a perspective view showing an essential portion of a sticking material transfer unit.

Fig. 14A is a perspective view showing aroud a sticking material cutter on the downstream side of the unit shown in Fig. 13, and Fig. 14B is a diagrammatical view showing an essential portion on the backside of the sticking material cutter.

Fig. 15A is a perspective view showing an essential portion of a pressing and heating unit, and Fig. 15B is a diagrammatical view showing an essential portion of its backside.

Fig. 16 is a view showing a time chart of the adhesion machine shown in Fig. 11.

Fig. 17A is a perspective view showing a state which the sticking material is peeled off from the postcard material of the embodiment of Fig. 6, and Fig. 17B is a partially sectional view thereof.

Best Mode for Carrying Out the Invention

Feg. 1 is a perspective view showing one example of a postcard according to the present invention.

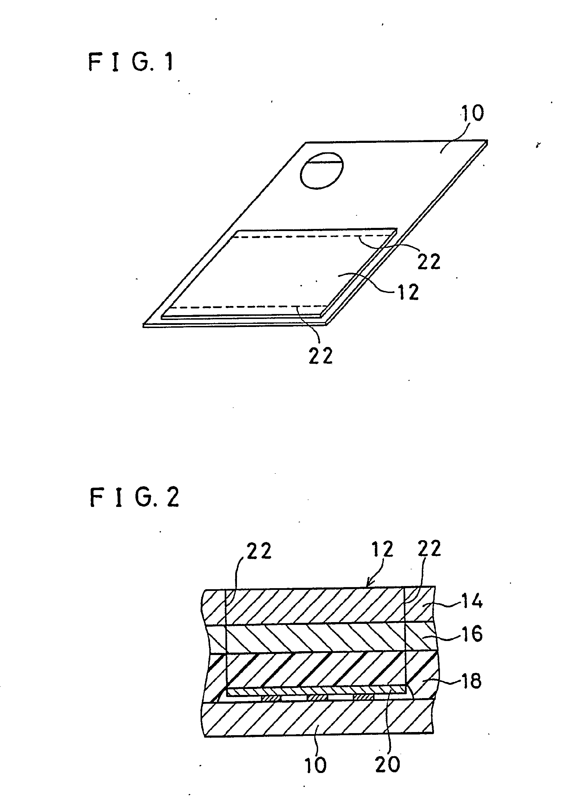

Fig. 2 is a partially sectional view thereof.

The postcard includes a postcard material 10 of the postal card size and a sticking material 12 adhered on a part of the postcard material 10.

The sticking material 12 includes a base material 14. The base material 14 is formed with a relatively soft material such as paper, synthetic resin film and the like which can be cut by a scissors or the like, and a suppression layer 16 is formed on one main surface thereof.

The suppression layer 16 is formed by printing a silver ink and the like or laminating a film material such as an aluminum foil having a suppressiveness with adhesives.

On the surface of the suppression layer 16, a heat adherent resin layer 20 is formed by coating the heat adherent resin as heating and extruding it, or by gravure or silk screen printing as dissolving it in a solvent or despersing in water.

The heat adherent resin layer 18 is formed to melt at about 100°C to 200°C so as to be adhered completely to the postcard sheet 10 such as the paper.

On the main surface of the heat adherent resin layer 18, an adhesion retarding layer 20 which reduces its adhesive power partly to weaken adhesiveness to the postcard material 10 is formed partly. In this embodiment, at the upside and downside of the postcard material 10, that is, the up and down sides of the sticking material 12, portions where the adhesion retarding layer 20 is not formed are present in a prescribed width.

The adhesion retarding layer 20 is formed by printing and coating a suitably selected resin which, when the heat adherent resin layer 18 is heated and melted, has adhesiveness only at the temperature higher than the non-adherent resin or the resin selected as the heat adherent resin forming the heat adherent resin layer 18.

Furthermore, perforations 22 are formed on both sides of the sticking material 12 along the edge thereof.

As an example of heat adherent resin, adhesives of EVA group may be selected. The composition comprises an EVA (ethylene-vinyl acetate copolymerized resin), tackifier, wax and anti-oxidant, to which sometimes a plasticizer and filler are added as an adjuvant.

As the tackifier there are glycerin of partially hydrogenated rosin, glycerin-ester of rosin, pentaerythritol modified rosin, petroleum resin, $\alpha$-methylstyrene/vinyl toluene copolymer, terpene oil polymer and terpene-phenol polymer, etc.

As the wax, there are paraffin wax, microcrystalline wax, low molecular weight polyethylene wax, Fischer-Tropsch wax, caster wax and chlorinated paraffin, etc.

As the anti-oxidant, there are hindered phenol group compound, salicylic acid group compound, benzophenone group compound, benzotriazol group compound, phosphorus group compound, sulfur group compound, organic metal group compound, etc.

As the heat adherent resins other than the aforesaid examples, there are polyethylene, ethylene-ethylacrylate copolymerized resin, ethylene-acrylic acid copolymerized resin, ethylene-methyl acrylate copolymerized resin, ethylene-methyl methacrylate, ethylene-methacrylic acid copolymerized resin, ionomer resin, polymethylpentene resin, ethylene-vinylalcohol copolymerized resin, vinylidene chloride resin, vinyl chloride-vinyl acetate copolymerized resin, polyamide resin, stylene-acrylic acid copolymerized resin, polystylene resin, polyacrylic acid copolymerized resin, polyester resin, polyurethane resin, waxes, etc. When printing and coating, these resins can be suitably used as heating or dissolving in a solvent or dispersing in water.

As an example of adhesion retarding layer 20, materials which show adhesiveness at the higher temperature than the heat adherent resin or not at all may be selected.

For example, an ultraviolet ray curing ink may be selected. The ultraviolet hardening ink comprises a color material, pre-polymer, monomer, light initiator, sensitizer and additives. Asthe pre-polymer, there are epoxy acrylate, polyolacrylate, polyester acrylate, polyether acrylate, unsaturated polyester, cationic polymerizing resin, melamine acrylate, unsaturated polybutadiene, drying oil acrylate and silicon acrylate.

As the monomer, there are monofunctional acrylates such as 2-ethyl acrylate, 2-hydroxyethyl acrylate, 2-hidroxypropyl acrylate and 2-hydroxyethyl methacrylate, and bifunctional acrylates such as 1, 3-butanediol diacrylate, 1, 4-butanediol diacrylate, 1, 6-hexanediol diacrylate, diethylene glycol diacrylate, neopentilglycol diacrylate, polyethylene glycol #400 diacrylate, hydroxybivalic acid ester neobenzyl glycol diacrylate, diethylene glycol dimethacrylate and polyethylene glycol #200 dimethacrylate, etc. and multifunctional acrylates such as trimethylolpropane triacrylate, pentaerythritol triacrylate, trimethylolpropane trimethacrylate, trimethylolethane trimethacrylate, tetramethylolmethane tetraacrylate, dipentaerythritol hexaacrylate, etc. In addition vinyl ether, itaconic acid ester and N-vinyl pyrolidone may be used.

As the light initiators, there are biacetyl, acetophenone, benzophenone, Michler's ketone, benzyl, benzoin, benzoin isobutyl ether, benzyl dimethylketal, tetramethylthiuram sulfide, azobisisobutylnitrile, benzoyl peroxide, 1-hydroxycyclohexilphenyl ketone, $\alpha$-hydroxyisobutyl phenone, p-isopropyl-$\alpha$-hydroxyisobutyl phenone, etc., in particular, benzophenone and its derivatives are used.

As the sensitizers, there are aliphatic amines such as n-butyl amine, di-n-butyl amine, triethyl amine, diethylaminoethyl methacrylate, etc., nitrogen heterocyclic compounds such as amines containing aromatic radical, piperizene, etc. sulfur compounds such as allyl group, O-tolylthiourea, sodium diethyldithiophosphate, soluble salt of aromatic sulfinic acid, etc., phosphorus compounds such as N, N-disubstituent-p-aminobenzonitrile compound, tri-n-butyl phosphine, sodium diethylthiophosphate, etc. and nitrogene compounds such as Michler's ketone, N-nitrosophydroxylamine derivatives, oxazoline compound, etc. and chlorine compounds such as carbon tetrachloride, hexachloroethane, etc.

As the additives, there are an anti-mist agent, lubricant, anti-oxidant, drying agent, wetting agent, wax, etc.

As the color materials, there are an organic pigment, body pigment, carbon black, titanium dioxide, metal powder, etc.

Next, a method of manufacturing the postcard will be explained.

First, a method of manufacturing the sticking material 12 will be explained.

Paper forming the base material 14 is prepared and on one main surface thereof, the suppression layer 16 is formed by allover printing with a silver ink, for example, by the known printing method as the offset printing or coating.

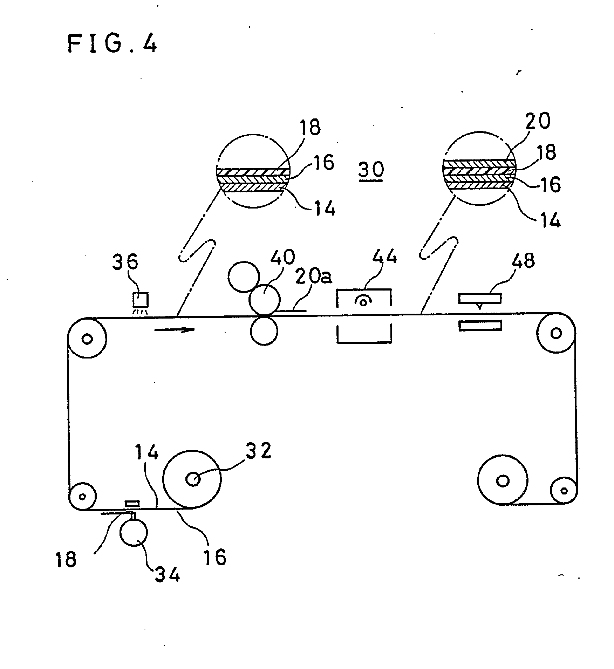

As showing Fig. 4, a rolled laminate comprising the base material 14 formed with the suppression layer 16 is mounted on a hold roller 32 of a sticking material manufacturing machine 30.

The base material 14 held by the hold roller 32 is loosen at one end and led to a heat adherant resin coater 34.

The heat adherent resin coater 34 is designed to print and coat the heat adherent resin 18a containing, for example, the aforesaid ethylene-vinyl acetate copolymerized resin as a main component, on the suppression layer 16 of the base material 14 while heating to a suitable temperature.

The base material 14 onto which the heat adherent resin 18a is printed and coated is then guided to a dryer 36 including a cold air blower, whereby the heat adherent resin 18a is dried and the heat adherent resin layer 18 is formed.

Next, the base material 14 formed with the heat adherent resin layer 18 is directed to a printing and coating unit 40 of an adhesion retarding agent 20a.

The coating unit 40 is the printing or coating machine utilizing known printing and coating methods such as a typographic printing, gravure printing, silk screen printing, offset printing or the like.

When printing and coating the ultraviolet ray curing ink, for example, the typographic printing machine is selected and 4 to 6 $g/m^2$ of ultraviolet ray curing ink is coated.

The base material 14 onto which the adhesion retarding agent 20a is printed or coated is led to a solidifier 44. As the solidifier 44 in the present embodiment, a high voltage mercury lamp is used to irradiate 160 W/cm per second.

Thus, the sticking material 12 is formed with the suppression layer 16, the heat adherent resin layer 18 and the adhesion retarding layer 20 on the base material 14. In addtion, the adhesion retarding layer 20 is formed with a distance in the wide direction of the base material 14.

The sticking material 12 is led to a perforator 48 for cutting perforations 22 for separation, thereby forming the perforations 22 at a prescribed distance, and then is rolled again.

The rolled sticking material 12 is cutting in the portion between the perforations 22, and is adhered on the lower column of the surface of the postcard material 10. In this case, when a confidential matter such as a bank account is formed on a portion of the surface of the postcard material and the confidential information is covered with the sticking material 12, the confidential matter is formed on the portion before covering with the sticking material 12.

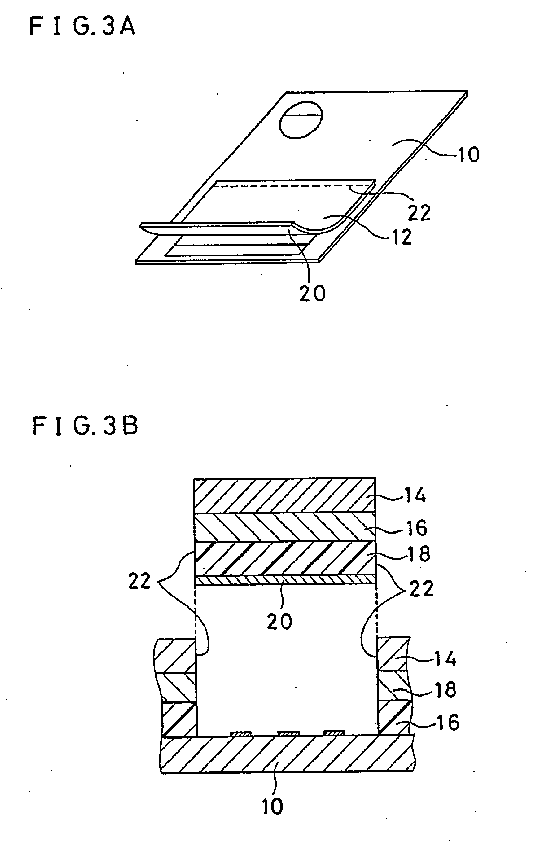

In the postcard, the sticking material 12 is sticked strongly to the postcard material 10 at the exposed portion of the heat adherent resin layer 18, and at the portion where the adhesion retarding layer 20 is formed the heat adherent resin layer 18 of the bottom layer is adhered weakly. Thus, as shown in Fig. 3A and Fig. 3B, the sticking material 12 can be peeled off relatively easily from the postcard material 10 at the portion where the adhesion retarding layer 20 is formed.

As the example of base material 14, besides the aforesaid example, there are films of synthetic paper, cellophane, polyethylene, polyester, etc. or an aluminum foil and the like. However, relatively soft materials are preferably selected as the base material 14 such that when the sticking material 12 is adhered to the postcard material 10, it will not come off easily therefrom against the adhesive force of the heat adherent resin layer 18 by the adhesive retarding layer 20 formed.

When the aluminum foil and the like having a good suppression is selected as the base material 14, the suppression layer 16 is not necessary as the aforesaid embodiment.

Though the rolled continuous paper is selected as the base material 14 in the foregoing embodiment, the base material separated into each piece, so-called, sheets may be selected.

Also, on the base material 14, any suitable printing which fits to properties of the postcard may be performed, or when the continuous material is used as aforesaid embodiment, for example, a detecting mask for detecting feeding pitches of the base material 14 may be printed with a black color or the like.

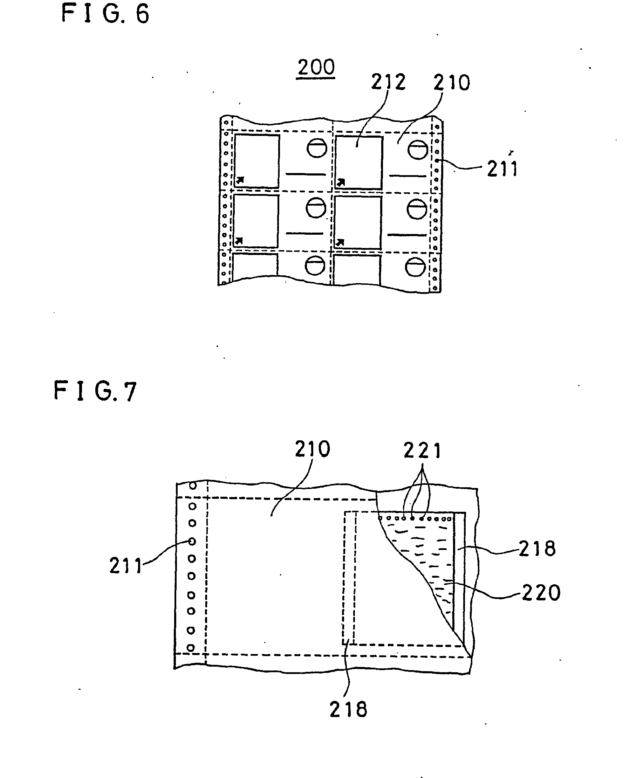

Fig. 6 is a surface view of a separate embodimemt. Fig. 7 is a backside view thereof.

A continuous postcard 200 includes a postcard material 210 of the postal card size and a sticking material 212 adhered on a part of the postcard material 210.

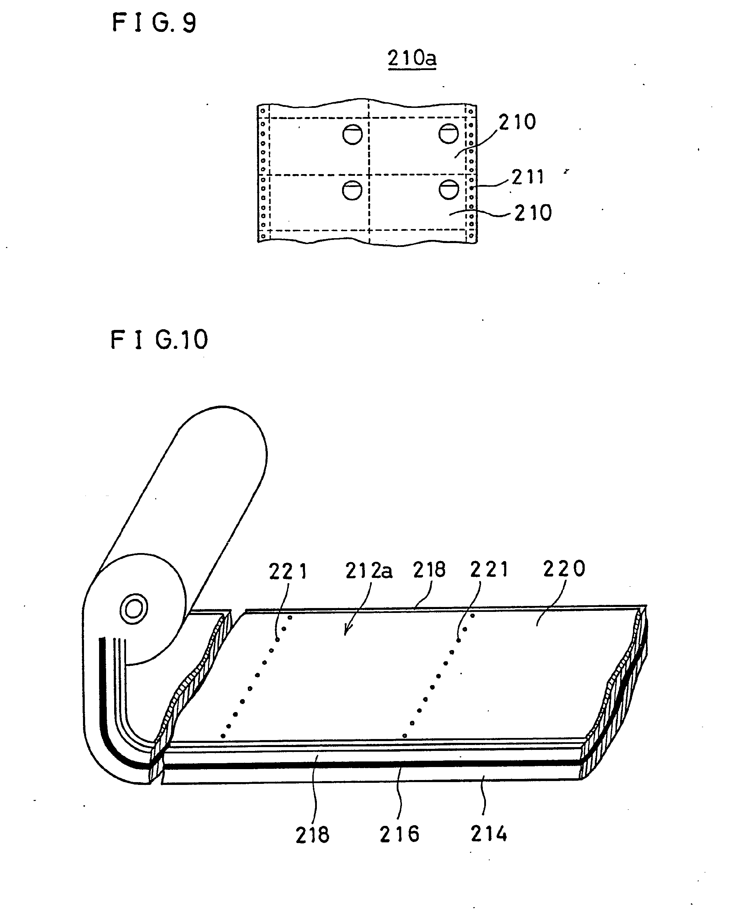

The continuous postcard 200, as shown in Fig. 9, includes a continuous raw paper 210a which is formed separably into the postcard material 210 of the postal card size. That is, on boundary lines of each postcard material 210, perforations are formed suitably to form each postcard , and at opposite ends of the continuous raw paper 210a , sprocket holes 211 are formed continuously at a suitable distance.

In the present invention, as the continuous raw paper 210a, thin materials such as synthetic paper and other synthetic resin sheets and the like are used besides the typical paper.

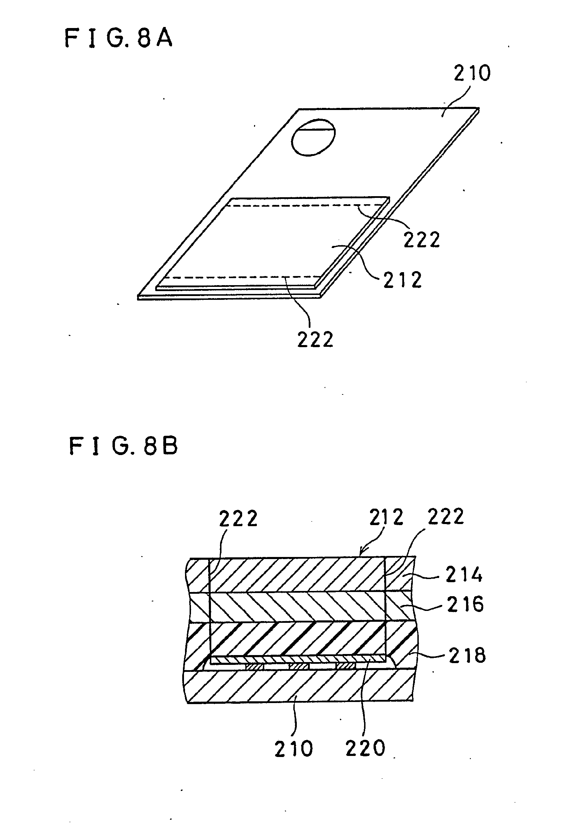

The sticking material 212, which is adhered on a portion provided with confidential matter such as finance and insurance account on the surface of the postcard material 210, will be explained in referto Fig. 7 and Fig. 8B principally.

The sticking material 212 includes a base material 214, a suppresion layer 216, a heat adherent resin layer 218, an adhesion retarding layer 220 and perforations 222, as same as the sticking material 12 of the postcard of Fig. 1.

In this embodiment, as shown in Fig. 7 and Fig. 10, at the upside and downside of the postcard material 210, that is, the sprocket holes 211 sides of the continuous raw paper 210a, portions where the adhesion retarding layer 220 is not formed are present in a fixed width. Moreover, at the front end of the sticking material 212 in the breadthwise direction of the continuous raw paper 210a, exposed spots 221 where the adhesion retarding layer 220 is not formed are present to expose the heat adherent resin layer 218 inspots. Thus, adhesion takes place weaker at the portion where the adhesion retarding layer 220 is formed and stronger at the portion where not formed.

Though the exposed spots 221 are formed at the front end of the stickingmaterial 212, they may be formed on both the front and rear ends or on either end. Moreover, the portion formed on the other end of the sticking material 212 where the heat adherent resin layer 218 is exposed totally by a fixed width may be used in place of the exposed spots 221.

The sticking material 212 is formed by a method as same as the method for manufacturing the sticking material 12 of the postcard of Fig. 1.

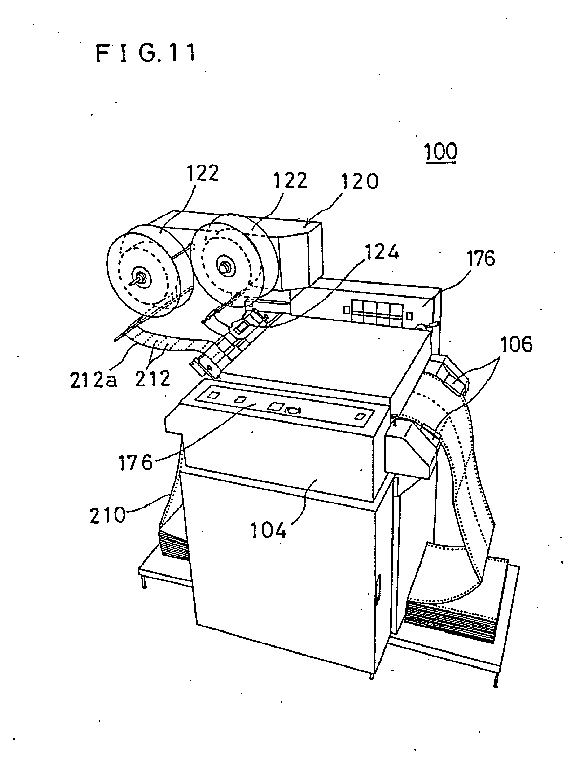

Next, a method for adhering the sticking material 212 to the surface of the continuous raw paper 210a will be explained on the basis of an adhesion machine shown in Fig. 11 through Fig. 16.

The adhesion machine 100 of the sticking material, as shown in Fig. 9, comprises a continuous paper transfer unit 102 which is designed to feed the continuous raw paper 210a to the position where the sticking material 212 is adhered.

The continuous paper transfer unit 102 includes transfer sprockets 106 formed substantially on opposite ends of a adhesion machine body 104, and an adhesive portion transfer device 108 which is formed substantially in the center of the adhesion machine body 104 to transfer the continuous raw paper 210a in the transferring direction by a suitable distance which, in the present embodiment, corresponds to the length of a sheet of sticking material 212 adhered to the postcard material 210. The transfer sprockets 106 which are designed to rotate belts formed with projections which engage to the sprocket holes 211 of the continuous raw paper 210a, successively engage the projections to the sprocket holes 211 to transfer the continuous raw paper 210a.

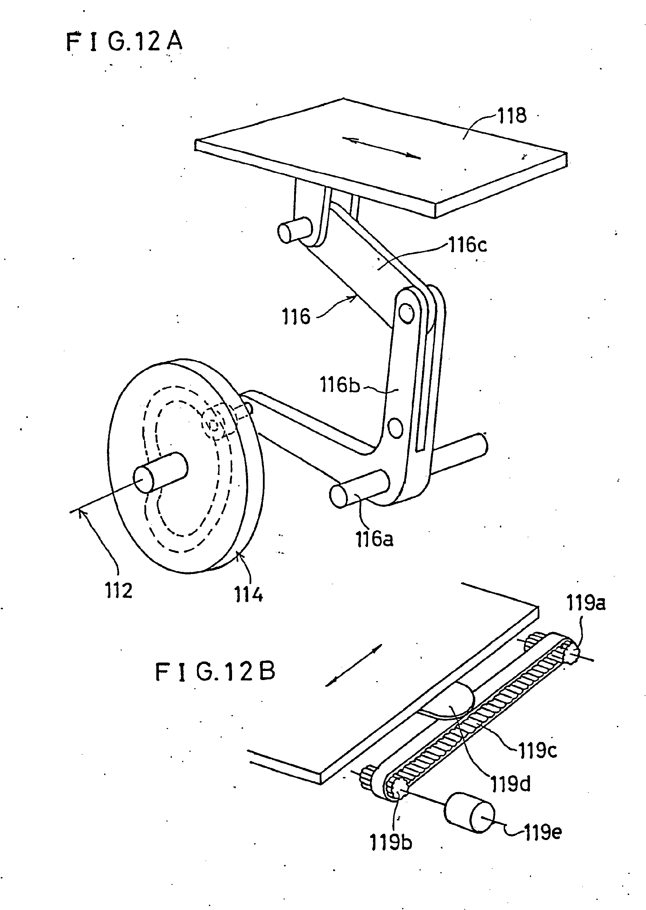

The adhesive portion transfer device 108, as shown in Fig. 12A, includes a continuous papter transfer cum 114 secured to a shaft 112 disposed across the front and rear of the adhesion machine body 104. A suitable groove is formed in the body of the continuous paper transfer cum 114 which gives suitable verticaland front-to-back movements to a link mechanism 116 by its uniform rotation. By the action of the link mechanism 116, an adhesive portion transfer table 118 fixed to the link mechanism 116 is moved back and forth continuously or intermittently. That is, the link mechanism 116 includes a link 116b which is fixed rockably to the adhesion machine body 104 with a pivot shaft 116a and a link 116c fixed rotatably to the adhesive portion transfer table 118, and the link 116b is pivotally fixed to the link 116c. The adhesive portion tranfer table 118 is move back and forth through the link mechanism 116 by rotation of the continuous paper transfer cum 114.

The amount of continuous raw paper 210a transferred in the continuous paper transfer unit 102, as shown in Fig. 12B, is detected by a synchronizing device 119. That is, a portion of the adhesive portion transfer table 118 is connected to a timing belt 119c mounted between timing pullies 119a and 119b provided at the front and rear of the adhesion machine body 104 by a connecting piece 119d, thereby the transferrig distance of the adhesive portion transfer table 118 is detected by a pulse signal from an encoder 119e coupled to the timing pully 119b to control the rotation of a pulsemotor which is a drive source formed on the continuous paper transfer unit 102 for the overall control.

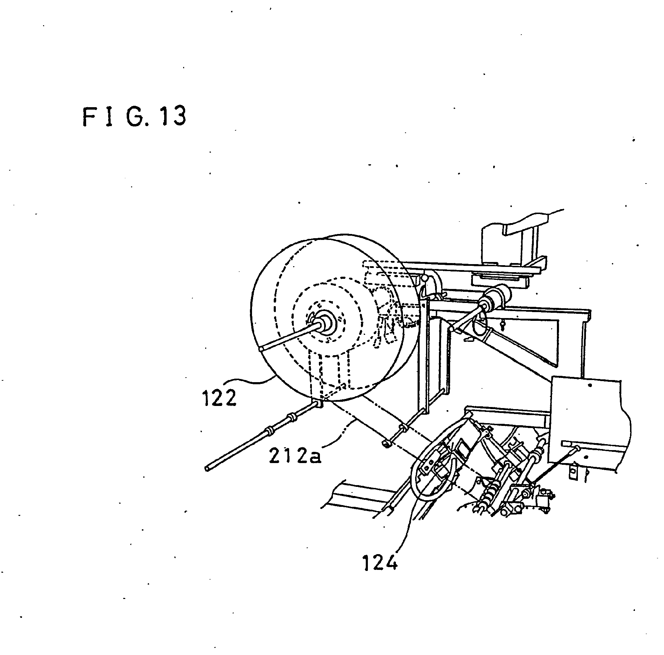

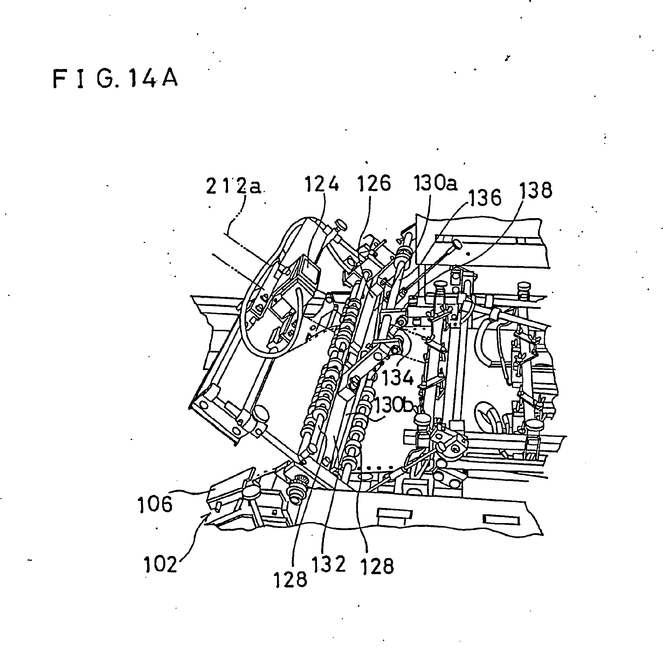

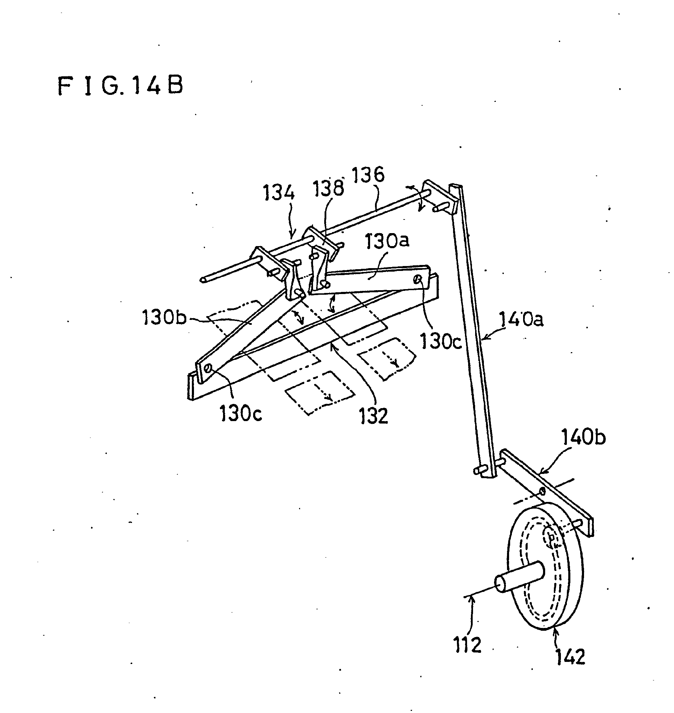

Next, a transfer unit of the sticking material 212 which is adhered to the surface of the continuous raw paper 210a fed successively by the continuous paper transfer unit 102 will be explained with reference to Fig. 13, Fig. 14A and Fig. 14B.

The sticking material transfer unit 120 includes a reel 122 whereon the rolled continuous sheet 212a of the sticking material continuously formed by the sticking material 212 is mounted, a sticking material detector 124 which detects the transferring amount of the continuous sheet 212a pulled out from the reel 122 and the arrival of the continuous sheet 212a at a specified position to output the electrical signal to a controller of the sticking material transfer unit 120, and a stickingmaterial cutter 126 which is disposedon the downstream side from the sticking material detector 124 to cut the continuous sheet 212a into a suitable length.

In the sticking material transfer unit 120, at the front and rear of the sticking material cutter 126 wich cuts the continuous sheet 212a, a pair of sticking material carries 128 comprising rubber rings fixed to a shaft and rotatable as contacting each other are disposed.

The continuous sheet 212a of the sticking materials clamped between the rings of the pair of sticking material carriers 128 is carried to the suitable position on the sufrface of the continuous raw paper 210a by the rotation of the sticking material carriers 128.

The sticking material cutter 126 includes cutter blades 130a and 130b. The cutter blades 130a and 1.30b are fixed to a cutter body 132 pivotally about pivot axes 130c at one end and to a link machanism 134 at the other end (refer to Figs. 14A and 14B).

The link mechanism 134 is fixed pivotally to a cutter shaft 136 fixed pivotally to the cutter body 132 through a fixed piece 138, and the cutter shaft 136 is connected to a disc 142 formed with a cum groove through links 140a and 140b as shown in Fig. 14B. The disc 142 is fixed to the shaft 112 which secures the continuous paper transfer cum 114.

Accordingly, as the disc 142 rotates the cutter shaft 136 is rotated by the action of cum groove formed in the disc 142 through the links 140a and 140b, thereby the cutter blades 130a and 130b are pivoted about the pivot axes 130c fixed to the cutter body 132 to cut the continuous sheet 212a of the sticking material into the suitable size.

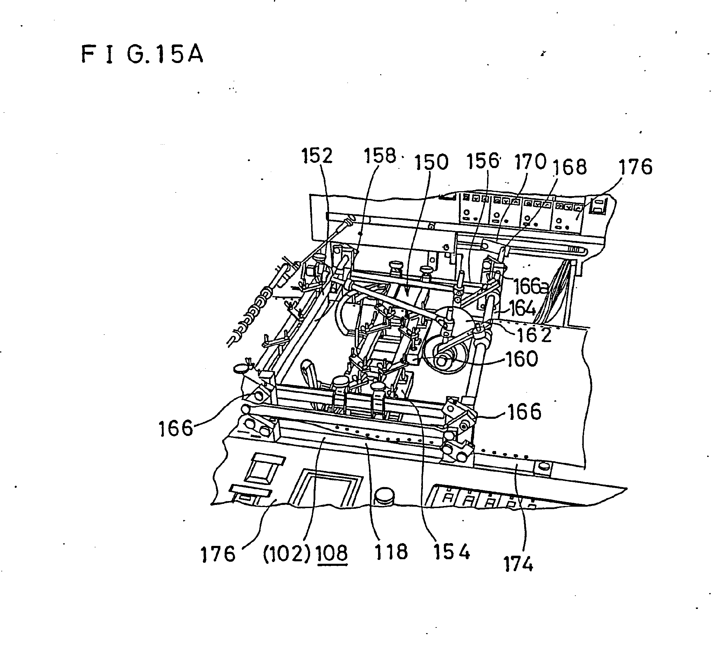

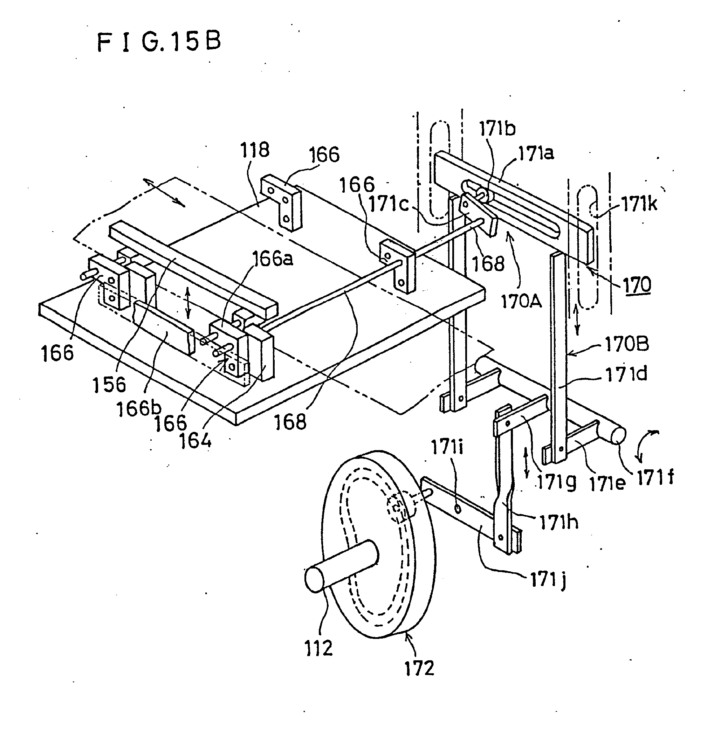

Next, a pressing and heating unit 150 which adheres the sticking material 212 to the continuous raw paper 210a will be explained with reference to Figs. 15A and 15B.

In the embodiment, the pressing and heating unit 150 includes a linear pressing ahd heating device 152 which presses the front end of the continuous sheet 212a of the sticking materials linearly in the breadthwise direction of the continuous raw paper 210a to adhere it primarily thereto, and a flat pressing and heating device 154 which adheres the sticking material 212 adhered to the continuous raw paper 210a at its front end by the linear pressing and heating device 152 to the continuous raw paper 210a.

The pressing and heating unit 150 includes a square-frame transfer pedestal 156. To the transfer pedestal 156, a linear heater 158 forming the linear pressing and heating device 152 and a plate heater 160 forming the flat pressing and heating device 154 are secured. The plate heater 160 has substantially the same area as the sticking material 212.

Furthermore, in the present embodiment, a press roller 162 is fixed pivotally to the transfer pedestal 156. The press roller 162 is designed to press the sticking material 212 adhered to the continuous raw paper 210a by the plate heater 160 to ensure close adhesion. The transfer pedestal 156 onto which the linear heater 158 and flat heater 160 are mounted is fixed movably above the adhesive portion transfer table 118, thereby the continuous raw paper 210a is transferred between the linear heater 158, plate heater 160 and press roller 162 and the adhesive portion transfer table 118. The transfer pedestal 156 is designed to advance back and forth together with the adhesive portion transfer table 118 along the transferring direction of the continuous raw paper 210a.

The transfer pedestal 156 is fixed to a support 164 secured upwardly at the side of adhesive portion transfer table 118 through a link mechanism 166 movably vertically such that the linear heater 158 and plate heater 160 can be attached to the adhesive portion transfer table 118 and detached from it.

That is, an approximately L-shaped link 166a of the link machanism 166 is fixed pivotally to the transfer pedestal 156 at one end, and to the support 164 pivotally at its center by a shaft 168. A pair of same link mechanisms 166 on the upstream and downstream sides are connected by a turnbuckle 166b at the other end of the link 166a so as to operate similarly. The shaft 168 is fixed pivotally to the support 164, thereby the transfer pedestal 156 is moved vertically together with the linear heater 158 and plate heater 160.

The shaft 168 is connected to a disc 172 formed with a cum groove through another link mechanism 170 disposed at one end. The disc 172 is fixed to the shaft 112 to which the continuous paper transfer cum 114 and disc 142 are secured.

The link mechanism 170 includes a rocking and straight moving link mechanism 170A constituted by a guide 171a provided with a slot in the center, a rotor 171b which moves in the slot while rotating and a link 171c connecting the shaft 168 and the rotor 171b. Additionally, the link mechanism 170 includes a vertically moving link mechanism 170B which moves the guide 171a vertically and constituted by a link 171d connected to the guide 171a, a link 171e fixed pivotally to the link 171d, another link 171g connected to the other end of the link 171e through a pivot shaft 171f, link 171h connected pivotally to the link 171g and a link 171j connected to the link 171h at its one end and fixed to the adhesion machine body 104 by a pivot axis 171i.

By the action of cum groove formed in the disc 172, the vertically moving link mechanism 170B is actuated, and by the action of the link mechanism 170B, the guide 171a moves up and down in a slot 171k formed vertically in the adhesion machine body 104, thereby the link 171c of the rocking and straight moving link mechanism 170A is rocked, rotating the shaft 168 at a suitable angle to move the transfer pedestal 156 vertically by the action of another link mechanism 166 previously described.

In the embodiment, though the linear heater 158 and plate heater 160 are secured integrally to the transfer pedestal 156, they are each controlled by temperature controllers (not shown) separately to keep suitable temperatures.

Reason for controlling the heater temperature separately is to enabling a delicate adjustment depending upon characteristics or the like of the heat adherent resin layer 320 formed on the sticking material 212.

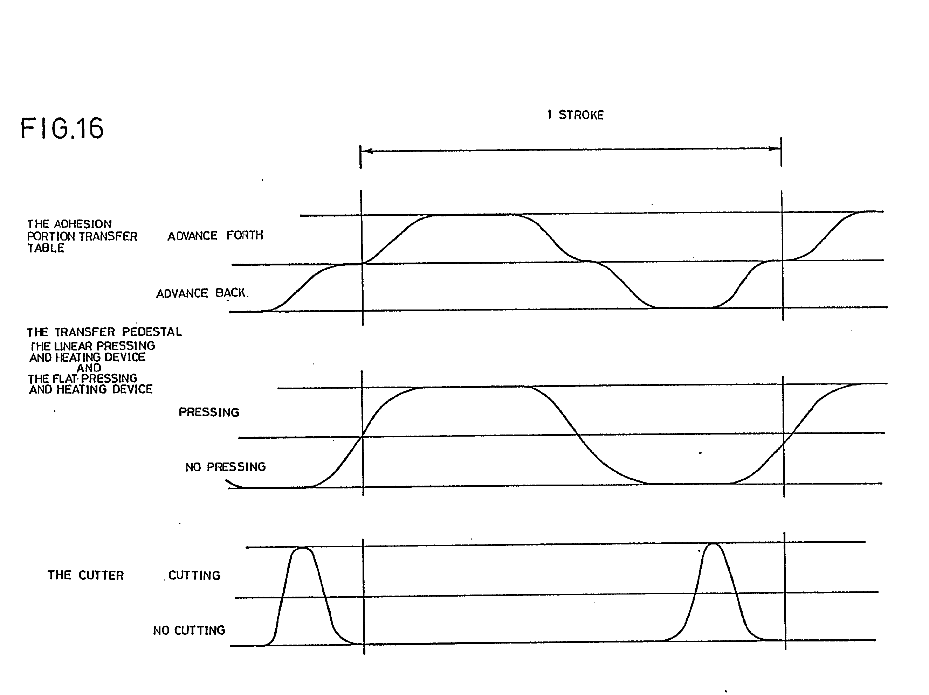

Now, operating conditions of the adhesion machine of the sticking material will be explained with reference to time charts shwon in Fig. 16.

A prescribed amount of continuous raw paper 210a is transferred by the transfer sprockets 106 of the continuous paper tranfer unit 102.

The adhesive portion transfer table 118, in the present embodiment, is moved from the downstream side to the upstream side of the continuous raw paper 210a.

While, as the continuous sheet 212a of the sticking material is transferred from the reel 122 by the sticking material transfer unit 120, the sticking material detector 124 detects a detecting mark, an arrow in this embodiment, formed on the continuous sheet 212a of the sticking material, and by the detecting signal of the sticking material detector 124, the continuous sheet 212a is stopped temporarilly as well as the adhesive portion transfer table 118. At this time, the sticking material cutter 126 is actuated and the cutter blades 130a and 130b cut the continuous sheet 212a of the sticking material into a suitable size, that is, a sheet of sticking material 212 by the action of cum groove in the disc 142.

The front end of the sticking material 212 cut into the suitable size by the sticking material cutter 126 is positioned at the optimum location on the continuous raw paper 210a, pressed and heated linearly in the breadthwise direction of the continuous raw paper 210a by the lineal pressing and heating device 152 forming the pressing and heating unit 150 to adhere primarily to the continuous raw paper 210a.

Then, simultaneously with pressing and heating, the continuous raw paper 210a is trabsferred by a fixed distance, corresponding approximately to the length of the sticking material 212 in this embodiment, to the downstream side by the action of continuous paper transfer unit 102. That is simultaneously, with pressing and heating of the sticking material 212 and postcard material 210 which were positioned under the flat pressing and heating device 154 in the previous cycle, the sticking material 212 is transferred by the prescribed distance as the continuous raw paper 210a moves to the downstream side.

After the adhesive portion transfer table 118 has moved by a prescribed amount on rails 174, the lineal pressing and heating device 152 and flat pressing and heating device 154 are again detached from the adhesive portion transfer table 118 by the action of cum groove in the disc 172 and positioned thereabove. At the same time, the lineal pressing and heating device 152 and flat pressing and heating device 154 are moved together with the adhesive portion transfer table 118 inversely to the flaw of continuous raw paper 210a, or to the prescribed position on the original upstream side. At this time, the press roller 162 presses the sticking material 212 while rotating.

Then, at the front end position of the following sticking material 212 transferred in the next cycle through cutting and other processes of the continuous sheet 212a of the sticking materials, the adhesive portion transfer table 118 and the linear pressing and heating device 152 and flat pressing and heating device 154 forming the pressing and heating unit 150 are reengaged. At this time, the sticking material 212 transferred in the previous cycle is positioned under the flat pressing and heating device 154. The continuous raw paper 210a adhered with the front end of the sticking material 212 of the next cycle is transferred by a prescribed distance by the action of the continuous paper transfer unit 102, and at the same time the front sticking material 212 transferred previously in the earlier cycle is pressed and heated by the flat pressing and heating device 154.

That is, when the sticking material 212 adhered at its front end is positioned under the flat pressing and heating device 154, initial upstream position, which is pressed to the surface of the adhesive portion transfer table 118 by the action of cum groove formed in the disc 172 to press and heat the sticking material 212.

Meanwhile, the transferring distance of the continuous raw paper 210a is restricted by a pulse sent from the encoder disposed on the continuous paper transfer unit 102, and transfer of the sticking material transfer unit 120, sticking material cutter 126 and pressing and heating unit 150 is controlled by a central processing unit 176. However, the continuous raw paper 210a is designed not to advance reversely in response to the backward movement of the adhesive portion transfer table 118 and the linear pressing and heating device 152 and flat pressing and heating device 154 of the pressing and heating 150.

The pressing and heating unit 150 thus repeats a cycle of forward movement, reflection point (downstream side), backward movement and reflection point (upstream side), and the sticking material 212 is adhered suitably to the surface of the postcard material 210 constituting the continuous postcard 300 as shown in Fig. 6.

The continuous postcard 200 thus covered with the sticking material 212 partly is folded suitably before separated.

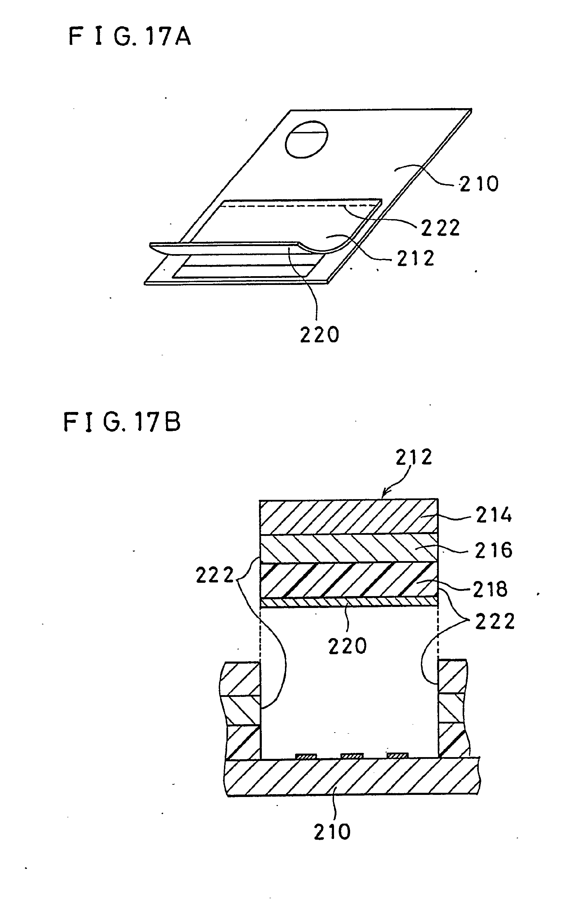

In this continuous postcard 200, the heat adherent resin layer 218 is adhered strongly to the postcard material 210 at the exposed portion of the heat adherent resin layer 218, and the heat adherent resin layer 218 of the bottom layer is adhered weakly at the portion where the adhesion retarding layer 220 is formed. Thus, as shown in Fig. 17A and Fig. 17B, the sticking material 212 can be peeled offrelatively easily from the postcard material 210 at the portion where the adhesion retarding layer 220 is formed.

Although the present invention has been particularly described and illustrated in the drawings, it is to be understood that such description is for illustrative purpose only and not restrictive. The spirit and scope of the present invention is, thereofre, to be determined solely by the appended claims.

Industrial Applicability

According to the present invention, since the adhesive surface of the sticking material to the postcard material is divided into the exposed portion of the heat adherent resin layer and the portion formed with the adhesion retarding layer which reduces the adhesive power of the heat adherent resin layer to weaken its adhesiveness to the postcard material, when heated and adhered thereto, the exposed portion of the heat adherent resin layer is adhered strongly to the postcard material, whereas the portion formed with the adhesion retarding layer is adhered more weakly thereto.

Accordingly, in the postcard, the sticking material can be peeled off relatively easily from the postcard material at the portion of adheision retarding layer, thereby enabling access to various information formed on the postcard material.

Moreover, according to the present invention, since the postcard divided into the portion adhered temporarily and the portion adhered completely can be obtained by heating and adhering the sticking material to the postcard material without processing the postcard material, only heat processing is required in manufacturing, enabling broad applications.

Besides, the postcard is just needed to be processed to the sticking material in manufacturing and the postcard material is not necessary to be processed, so that its manufacturing process as well as an adhesion machine of a sticking material used in manufacturing postcards can be simplified with ease.

## CLAIMS

1. A postcard comprising a postcard material, and a sticking material adhered on said postcard material for covering at least a part of said postcard material,

wherein said sticking material comprising a base material formed with a heat adherent resin layer on its main surface, whereon an adhesion retarding layer which reduces the adhesive force of said heat adherent resin layer to weaken adhesiveness to said postcard material is formed.

2. A postcard as recited in claim 1, wherein said sticking material is adhered on a portion provided a confidential matter on said postcard material.

3. A postcard as recited in claim 1, wherein said heat adherent resin layer is constituted by coating a heat adherent resin entirely on one main surface of said base material.

4. A postcard as recited in claim 1, which further comprises a suppression layer formed on said base material on the side where said heat adherent resin layer is formed.

5. A postcard as recited in claim 4, wherein said suppression layer is constituted by printing and coating a silver ink.

6. A postcard as recited in claim 4, wherein said suppression layer is constituted by laminating aluminum foils.

7. A postcard as recited in claim 1, wherein said adhesion retarding layer is constituted by printing and coating an ultraviolet hardening ink.

8. A postcard as recited in claim 1, wherein said postcard materials are formed continuously and separatably.

9. A manufacturing method of a postcard comprising;

a process for preparing a postcard material,

a process for printing and coating picture lines on said postcard material,

a process for forming a sticking material by forming a heat adherent resin layer on a base material and by forming an adhesion retarding layer which reduces the adhesive force of said heat adherent resin layer to weaken adhesiveness to said postcard material, and

a process for adhering said heat adherent resin layer to said postcard material by attaching said heat adherent resin layer to said postcard material and by heating said sticking material.

10. A manufacturing method of a postcard as recited in claim 9, wherein said sticking material is adhered on a portion provided a confidential matter on said postcard matrial.

11. A manufacturing method of a postcard as recited in claim 9, wherein said heat adherent resin layer is formed by printing and coating a heat adherent resin entirely on one main surface of said base material.

12. A manufacturing method of a postcard as recited in claim 9, which further comprises a process for forming a suppression layer on said base material.

13. A manufacturing method of a postcard as recited in claim 12, wherein said suppression layer is constituted by printing and coating a silver ink.

14. A manufacturing method of a postcard as recited in claim 12, wherein said suppression layer is constituted by laminated aluminum foils.

15. A manufacturing method of a postcard as recited in claim 9, wherein said adhesion retarding layer is formed by printing and coating an ultraviolet hardening ink.

16. A manufacturing method of a postcard as recited in claim 9, wherein said sticking material is formed by cutting a rolled sticking material and by adhering said rolled sticking material to said postcard material.

17. A manufacturing method of a postcard as recited in claim 9, wherein said process for preparing said postcard material comprises a process for preparing a continuous raw paper which is formed separably into said postcard materials.

F I G. 1

10

22

12

22

F I G. 2

22    12    22

14

16

18

10    20

FIG.3A

FIG.3B

# FIG.4

F I G. 5

F I G. 6

F I G.7

## F I G. 8A

## F I G. 8B

F I G. 9

F I G. 10

FIG.11

F I G.12 A

118

116c

116

116b

116a

112

114

F I G.12 B

119a

119c

119d

119b

119e

F I G. 13

122

212a

124

F I G. 14 A

# F I G. 14 B

# F I G.15A

F I G.15B

# FIG.16

THE ADHESION
PORTION TRANSFER     ADVANCE FORTH
TABLE

ADVANCE BACK.

THE TRANSFER PEDESTAL
THE LINEAR PRESSING
AND HEATING DEVICE
AND
THE FLAT PRESSING
AND HEATING DEVICE

PRESSING

NO PRESSING

THE CUTTER     CUTTING

NO CUTTING

1 STROKE

EP 0 371 136 A1

F I G. 17A

210

222

212

220

F I G. 17B

212

214

216

222

218

222

220

210

# INTERNATIONAL SEARCH REPORT

International Application No PCT/JP89/00113

## I. CLASSIFICATION OF SUBJECT MATTER (if several classification symbols apply, indicate all) ⁶

According to International Patent Classification (IPC) or to both National Classification and IPC

Int. Cl⁴ B42D15/02

## II. FIELDS SEARCHED

### Minimum Documentation Searched ⁷

| Classification System | Classification Symbols |
|---|---|
| IPC | B42D15/02 |

### Documentation Searched other than Minimum Documentation to the Extent that such Documents are Included in the Fields Searched ⁸

| | |
|---|---|
| Jitsuyo Shinan Koho | 1965 – 1988 |
| Kokai Jitsuyo Shinan Koho | 1971 – 1988 |

## III. DOCUMENTS CONSIDERED TO BE RELEVANT ⁹

| Category * | Citation of Document, ⁺ with indication, where appropriate, of the relevant passages ⁺⁺ | Relevant to Claim No. ¹³ |
|---|---|---|
| Y | JP, U, 55-15006 (Tanaka Yoshio and one other) 30 January 1980 (30. 01. 80) All sentences (Family: none) | 1, 2, 10, 11 |
| Y | JP, U, 63-8982 (Ono Yoshio) 21 January 1988 (21. 01. 88) All sentences (Family: none) | 1, 2, 10, 11 |
| Y | JP, U, 63-21068 (Sayama Kako Kabushiki Kaisha) 12 February 1988 (12. 02. 88) All sentences (Family: none) | 1-6, 10-14 |
| Y | JP, A, 63-35392 (Toppan Moore Co., Ltd.) 16 February 1988 (16. 02. 88) All sentences (Family: none) | 8-14, 16, 17 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| April 20, 1989 (20. 04. 89) | May 1, 1989 (01. 05. 89) |

| International Searching Authority | Signature of Authorized Officer |
|---|---|
| Japanese Patent Office | |

Form PCT ISA 210 (second sheet) (January 1985)